# EUROPÄISCHE PATENTSCHRIFT

(11) **EP 0 713 884 B1**
(45) Veröffentlichungstag und Bekanntmachung des Hinweises auf die Patenterteilung: **15.09.1999**
(21) Anmeldenummer: 95118131.2
(22) Anmeldetag: 17.11.1995
(51) Int. Cl.: C08F 6/02, C08F 10/00

(54) **Verfahren zur Herstellung von Polyolefinen mit geringen extrahierbaren Anteilen**
Process for the production of polyolefins having little extractable parts
Procédé de préparation de polyoléfines contenant peu de composants extractibles

(30) Priorität: 26.11.1994 DE 4442166
(43) Veröffentlichungstag der Anmeldung: 29.05.1996
(73) Patentinhaber: BASF AKTIENGESELLSCHAFT, 67056 Ludwigshafen (DE)
(72) Erfinder: Rohde, Wolfgang, D-67346 Speyer (DE); Funk, Guido, D-67549 Worms (DE); Görtz, Hans-Helmut, D-67251 Freinsheim (DE); Osterloh, Rolf, D-50374 Erftstadt (DE)

(56) Entgegenhaltungen:
- EP-A- 0 001 150
- EP-A- 0 604 958
- DE-A- 3 322 938
- US-A- 4 701 489
- DATABASE WPI Section Ch, Week 8645 Derwent Publications Ltd., London, GB; Class A17, AN 86-293258 & ES-A-8 605 289 ( EMPRESA NAC PETROLE) , 16.August 1986 & ES-A-8 605 289

## Beschreibung

Die vorliegende Erfindung betrifft ein Verfahren zur Herstellung von stabilisierten Olefinpolymerisaten, welche einen geringen, mit kaltem Heptan extrahierbaren Anteil aufweisen, mittels Polymerisation von Olefinen mit Ziegler- oder Phillips-katalysatoren bei Temperaturen zwischen 30 und 140°C.

Außerdem betrifft die Erfindung die Olefinpolymerisate, die Verwendung der so erhaltenen stabilisierten Olefinpolymerisate zur Herstellung von Fasern, Folien und Formkörpern sowie die hierbei erhältlichen Fasern, Folien und Formkörper.

Olefinpolymerisate, insbesondere Ethylenpolymerisate, werden verbreitet zur Herstellung von Folien und Formkörpern verwendet.

Die hierfür eingesetzten Olefinpolymerisate werden in vielen Fällen durch die Niederdruckpolymerisation von Olefinen in Gegenwart von Ziegler- oder Phillipskatalysatorsystemen gewonnen.

Bei dieser Art von Polymerisation kann jedoch häufig eine unkontrollierte Nachpolymerisation der Monomeren außerhalb der eigentlichen Reaktionszone stattfinden, die im allgemeinen zur Bildung von Polymerisatbrocken, Wandbelägen und klebrigen Polymerisaten führt, die das Austragssystem der Polymerisationsanlage verstopfen können und so den wirtschaftlichen, kontinuierlichen Betrieb gefährden können.

Außerdem können die unkontrolliert gebildeten Polymerisatfraktionen, sie sind häufig niedermolekular und/oder comonomerreich, das gesamte Polymerisat kontaminieren und so dessen Eigenschaftsprofil nachteilig beeinflussen.

Die Polymerisationsaktivität von Ziegler- oder Phillips-katalysatoren kann im allgemeinen mittels Katalysatorgiften zum Erliegen gebracht werden.

US 3,502,633 beschreibt hierzu den Einsatz von Alkoholen mit 1 bis 4 C-Atomen als Katalysatorgift im Austragsbereich einer Polymerisationsanlage.

US 4,211,863 beschreibt den Einsatz von Kohlendioxid und anderen sauerstoffhaltigen Katalysatorgiften im Austragsbereich einer Polymerisationsanlage.

Beide Verfahren weisen jedoch den Nachteil auf, daß die eingesetzten Katalysatorgifte mit dem Kreisgas, welches unter anderem Restmonomere aus dem Austragssystem in den Reaktor zurückführt, in den Reaktor gelangen und dort ebenfalls den Polymerisationskatalysator vergiften können. Um dies zu verhindern, sind im allgemeinen aufwendige Verfahren zur Abtrennung der Katalysatorgifte aus dem Kreisgas erforderlich.

Die Erfindungsregistrierungsschrift US H 860 beschreibt die reversible Desaktivierung von Ziegler-Katalysatorsystemen durch die Zugabe von sterisch gehinderten Phenolen in den Polymerisationsreaktor und anschließende Reaktivierung des Katalysatorsystems. Dieses Verfahren birgt jedoch den Nachteil, daß der Polymerisationsprozeß im Reaktor immer wieder unterbrochen wird.

EP-A-0 604 958 beschreibt ein mehrstufiges Verfahren zum Finishing von Polymeren. Dabei wird eine phenolische Verbindung in die Reaktionszone gegeben. Der aktive Katalysator wird bei der anschließenden Aufarbeitung durch Wasserbehandlung desaktiviert.

DE-33 22 938 beschreibt ein Verfahren zur Herstellung von Homo - und Copolymerisaten des Propylens. Zur Aufarbeitung des Reaktionsgemisches werden zunächst flüchtige Bestandteile abgedampft. Zum Schutz der Polymerisate vor Vergilben wird anschließend eine Stabilisatormischung, welche auch eine phenolische Verbindung enthält, zugegeben.

Keines dieser Verfahren führt zu Polymerisaten mit hinreichend niedrigen Anteilen an hexanextrahierbaren Bestandteilen.

Der Erfindung lag daher die Aufgabe zugrunde, die vorher genannten Nachteile zu beseitigen.

Demgemäß wurde ein Verfahren zur Herstellung von stabilisierten Olefinpolymerisaten, welche einen geringen, mit kaltem Heptan extrahierbaren Anteil aufweisen, mittels Polymerisation von Olefinen mit Ziegler- oder Phillipskatalysatoren gefunden, wobei man das Polymerisationsgemisch unmittelbar nach dem Verlassen des Polymerisationsreaktors mit einem Phenolderivat, welches einen Siedepunkt von mehr als 270°C, gemessen bei 100 kPa, hat, in Berührung bringt.

Weiterhin wurden die Olefinpolymerisate erhältlich nach dem erfindungsgemäßen Verfahren, sowie die Verwendung der so erhaltenen Olefinpolymerisate zur Herstellung von Fasern, Folien und Formkörpern sowie die hierbei erhältlichen Fasern, Folien und Formkörper gefunden.

Die erfindungsgemäßen Olefinpolymerisate werden durch Homo- oder Copolymerisation von C₂- bis C₁₀-Alk-1-enen unter Niederdruckbedingungen erhalten. Geeignete Alk-1-ene sind Ethylen, Propylen, 1-Buten, 1-Penten, 1-Hexen, 1-Hepten, 1-octen, 1-Nonen und 1-Decen.

Zur Herstellung der Olefincopolymerisate werden im allgemeinen zwei oder mehr unterschiedliche Alk-1-ene copolymerisiert, wobei 1 das Mengenverhältnis der Monomere im allgemeinen unkritisch ist.

Vorzugsweise werden Ethylen und C₃- bis C₁₀-Alk-1-ene copolymerisiert und insbesondere Ethylen und 1-Hexen.

Die Ethylen/Alk-1-en-Copolymerisate enthalten im allgemeinen 0,1 bis 10 mol-% Alk-1-eneinheiten, vorzugsweise 0,1 bis 5 mol-% und insbesondere 0,2 bis 2 mol-%.

Die Ethylen/1-Hexen∼Copolymerisate enthalten im allgemeinen 0,1 bis 10 mol-% 1-Hexeneinheiten, vorzugsweise 0,1 bis 5 mol-% und insbesondere 0,2 bis 2 mol-%.

Der chemisch gebundene Comonomeranteil der Olefinpolymerisate wurde mit der Methode der ¹³C-NMR-Spektroskopie nach J. C. Randall et al. , J. Macromol. Sci., Rev. Macromol. Chem. Phys. (1989, C 29 (2/3)) bestimmt.

Die Schmelzflußindizes der Homo- und Copolymerisate, bestimmt nach DIN 53735 bei 190 °C (Auflagegewichte in Klammern), liegen in der Regel im Bereich von 0,1 g/10 min (21,6 kg) bis 100 g/10 min (2,16 kg), vorzugsweise im Bereich von 2 g /10 min (21,6 kg) bis 20 g/10 min (2,16 kg) und insbesondere im Bereich von 5 g/10 min (21,6 kg) bis 10 g/10 min (2,16 kg).

Die für die Polymerisation geeigneten Katalysatorsysteme sind dem Fachmann bekannt. Der Vollständigkeit halber seien hier Katalysatorsysteme genannt, die sich durch die Kombination einer oder mehrerer Übergangsmetallkomponenten und einem oder mehreren Aktivatoren, auch Cokatalysatoren genannt, ergeben. Sie werden als Ziegler- und Metallocenkatalysatoren bezeichnet. Außerdem sind für das erfindungsgemäße Verfahren Phillips-Katalysatoren geeignet. Vorzugsweise werden für Ethylen-Homo- und Copolymerisationen Phillips-Katalysatoren verwendet.

Die Polymerisation kann in den üblichen, für die Niederdruckpolymerisation von Alk-1-enen verwendeten Reaktoren entweder absatzweise oder bevorzugt kontinuierlich in Suspension, Lösung, Gasphase oder im flüssigen Monomeren durchgeführt werden. Vorzugsweise führt man die Ethylenpolymerisationen in Suspension oder in der Gasphase durch.

Die Polymerisationstemperaturen liegen im allgemeinen im Bereich von 30 bis 140°C, vorzugsweise im Bereich von 50 bis 110°C und insbesondere im Bereich von 70 bis 100°C.

Die Polymerisationen werden im allgemeinen bei einem Druck im Bereich von 100 bis 10000 kPa, vorzugsweise im Bereich von 1000 bis 6000 kPa und insbesondere im Bereich von 2000 bis 4000 kPa durchgeführt.

Die Flüchtigkeit des Phenolderivats wird hier ausgedrückt durch seinen Siedepunkt und sein Molgewicht. In der Regel wird eine umgekehrte Proportionalität zwischen Flüchtigkeit und Siedepunkt oder Flüchtigkeit und Molgewicht angenommen.

Der Siedepunkt des Phenolderivats des erfindungsgemäßen Verfahrens, gemessen bei, oder extrapoliert auf 100 kPa ist nicht geringer als 270 °C, vorzugsweise nicht geringer als 280 °C und insbesondere nicht geringer als 290 °C.

Das Molgewicht des erfindungsgemäßen Phenolderivats ist vorzugsweise nicht geringer als 250. Es liegt besonders bevorzugt im Bereich von 300 bis 3000 und insbesondere im Bereich von 350 bis 2500.

An das erfindungsgemäße Phenolderivat werden, die chemische Struktur betreffend, keine besonderen Anforderungen gestellt.

Geeignete Vertreter sind sterisch gehinderte Phenole, also solche mit großen, meist verzweigten Substituenten in der Nachbarschaft der phenolischen Hydroxylgruppe. Dies können C-organische Gruppen, Si-organische Gruppen oder andere Element-organische Gruppen, sowie Halogenatome sein. Besonders geeignete Vertreter sind die Derivate des 2,6-Di-tert.-Butylphenols. Eine oder mehrere dieser o,o-Di-tert.-Butylphenolstruktureinheit(en) kann (können) weiterhin in vielfältiger Art und Weise mit anderen organischen Struktureinheiten verknüpft sein.

Besonders geeignete Vertreter dieser Verbindungsklasse sind zum Beispiel Pentaerythrityl-tetrakis [3- (3, 5-di-tert .-butyl-4-hydroxyphenyl)-propionat] (I), als Irganox® 1010 im Handel, Octadecyl [3- (3, 5-di-tert .-butyl-4-hydroxyphenyl) -propionat] (II) , als Irganox® 1076 im Handel, 4,4'4"-[(2,4,6-trimethyl-1,3,5-ben-zentriyl) tris (methylen)] tris [2,6-bis(1,1-dimethylethyl)-phenol(III), als Irganox® 1330 im Handel. 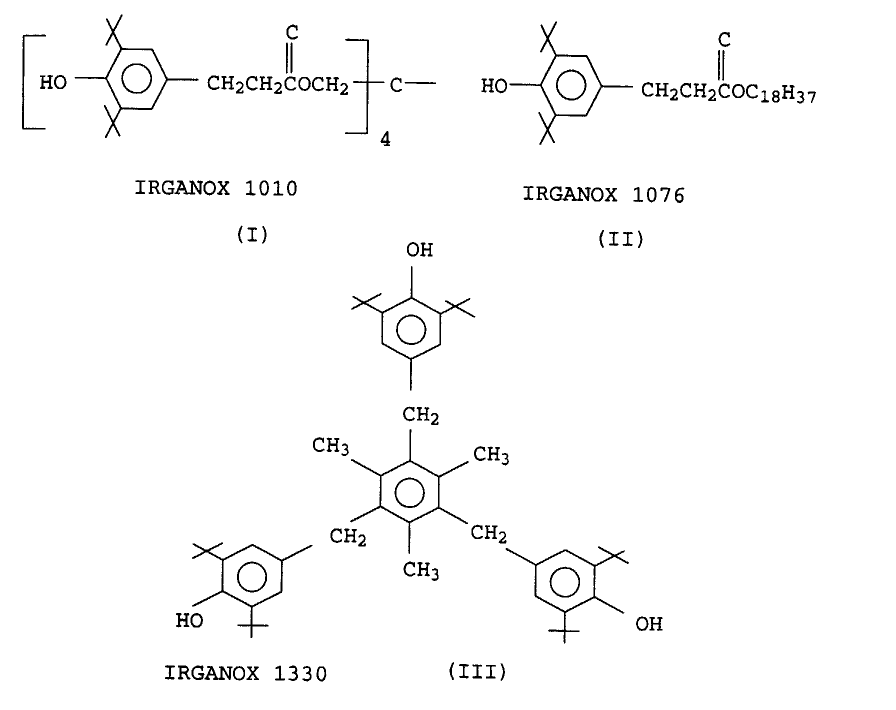 Besonders geeignete Phenolderivate werden als Antioxidantien für Polyolefine verwendet.

Das Phenolderivat wird vorzugsweise in einem, sich gegenüber den Bestandteilen des Polymerisationsreaktionsgemisches weitgehend inert verhaltenden, Lösungsmittel gelöst eingesetzt. Geeignete Lösungsmittel sind aromatische und aliphatische Kohlenwasserstoffe, wie zum Beispiel Toluol, Ethylbenzol, Hexan, Heptan oder Gemische dieser Kohlenwasserstoffe.

Die Konzentration des Phenolderivats in diesen Lösungen ist 0,01 bis 10 M, vorzugsweise 0,05 bis 1 M.

Erfindungswesentlich ist, daß das Phenolderivat so früh wie möglich, nachdem das Polymerisationsgemisch den Reaktor verlassen hat, dosiert wird.

Die Dosierstelle für das Phenolderivat des erfindungsgemäßen Verfahrens befindet sich daher zweckmäßigerweise zwischen dem Produktaustragsventil des Polymerisationsreaktors und dem ersten Entspannungsbehälter für das Polymerisationsgemisch, wobei die Dosierstelle sowohl am Produktaustragsventil als auch am Entspannungsbehälter selbst angebracht sein kann.

Besonders vorteilhaft ist es, wenn das Phenolderivat in den Entspannungsbehälter dosiert wird. Dieser Entspannungsbehälter befindet sich vorteilhafterweise ca. 5 bis 20 m von dem Reaktor produktstromabwärts entfernt.

Die Zeitspanne, in der eine Referenzfraktion des Stroms des Polymerisationsgemisches in der Zone zwischen Reaktor-Austragsventil und der Dosierstelle für das erfindungsgemäße Phenolderivat verbringt, ist im Bereich von 0, 01 bis 5000 s, bevorzugt im Bereich von 0,1 bis 1000 s und insbesondere im Bereich von 0,1 bis 100 s.

Der Druck, der in der Zone herrscht, in die das Phenolderivat dosiert wird, liegt im allgemeinen im Bereich von 100 bis 2000 kPa, vorzugsweise im Bereich von 100 bis 1000 kPa und insbesondere im Bereich von 100 bis 500 kPa und ist im allgemeinen geringer als der Druck, der im Polymerisationsreaktor selbst herrscht.

Die Menge des dosierten Phenolderivats, bezogen auf die berechnete Menge Katalysatorfeststoff, gemessen in Mol Phenolderivat pro kg Katalysatorfeststoff, liegt im allgemeinen im Bereich von 0,01 bis 10 Mol/kg, vorzugsweise von 0,02 bis 5 Mol/kg und insbesondere von 0,05 bis 3 Mol/kg.

Der Begriff Phenolderivat beschränkt sich nicht nur auf eine bestimmte chemische Verbindung. Es ist selbstverständlich möglich, ein Gemisch aus mehreren Phenolderivaten im erfindungsgemäßen Verfahren einzusetzen.

Nach dem erfindungsgemäßen Verfahren wird die unkontrollierte Nachpolymerisation von Monomeren im Austragssystem der Polymerisationsanlage praktisch unterbunden, ohne daß Störungen der Polymerisationsreaktion im Reaktor selbst auftreten. Die Desaktivierungsreaktion verläuft verhältnismäßig schnell.

Die nach dem erfindungsgemäßen Verfahren erhältlichen Olefinpolymerisate enthalten unvorhergesehenerweise nur noch geringe mit kaltem Heptan extrahierbare Anteile.

Zur Bestimmung dieser Anteile, im folgenden KHE genannt, wird eine bestimmte Menge Olefinpolymerisat in Grießform mit Heptan bei 23°C 120 Minuten lang extrahiert und anschließend das Heptan des Extrakts verdampft und der Rückstand bei 100°C bis zur Gewichtskonstanz getrocknet. Der Rückstand wird gewogen und sein Anteil, bezogen auf das eingesetzte Olefinpolymerisat, in Gew.-% umgerechnet.

Die so bestimmten mit kaltem Heptan extrahierbaren Bestandteile des Olefinpolymerisats liegen im Bereich von 0,0 bis 2,0 Gew.-% und vorzugsweise im Bereich von 0,0 bis 1,0 Gew.-%.

Aufgrund dieser geringen Menge mit kaltem Heptan extrahierbarer Anteile eignen sich die nach dem erfindungsgemäßen Verfahren erhältlichen Olefinpolymerisate besonders zur Herstellung von Folien und Formkörpern für den Verpackungsbereich.

### Beispiele

### Beispiel 1 (enthält nicht alle Elemente der Erfindung)

In einem 1 l-stahlautoklaven legte man 500 ml Isobutan als Suspensionsmittel und 20 ml 1-Hexen vor. Bei 90 °C wurde dann Ethylen bis zu einem Gesamtdruck von 3000 kPa aufgepreßt und anschließend 81 mg eines Phillipskatalysators, wie er in DE-A 25 40 279 (Beispiel) beschrieben wurde, zudosiert. Es wurde dann 55 min lang polymerisiert. Dann verminderte man den Druck im Autoklaven auf 200 kPa und dosierte sodann 2 ml einer 0,1 M Lösung von Octadecyl [3- (3,5-di-tert.-butyl-4-hydroxyphenyl) -propionat](II) in Heptan zu dem Inhalt des Autoklaven und wartete 1 h. Hiernach trug man das Copolymerisat (55 g) an Luft aus und bestimmte anschließend den mit kaltem Heptan extrahierbaren Anteil. Er betrug in diesem Versuch 0,69 Gew.-%. Das Copolymerisat enthielt 1,6 mol-% von 1-Hexen abgeleitete Einheiten. Der Autoklav enthielt im Inneren keine Polyolefin-Wandbeläge.

### Beispiel 2 (Vergleich)

Man verfuhr analog Beispiel 1, jedoch setzte man kein Phenolderivat zu. Jetzt betrug der mit kaltem Heptan extrahierbare Anteil des Copolymerisats 3,12 Gew.-% und im Autoklaveninnern waren Polyolefin-Wandbeläge zu erkennen.

## Patentansprüche

1. Verfahren zur Herstellung von stabilisierten Olefinpolymerisaten welche einen geringen, mit kaltem Heptan extrahierbaren Anteil aufweisen, mittels Polymerisation von Olefinen mit Ziegler- oder Phillipskatalysatoren bei Temperaturen zwischen 30 und 140°C, dadurch gekennzeichnet, daß man das Polymerisationsgemisch unmittelbar nach dem Verlassen des Polymerisationsreaktors mit einem Phenolderivat, welches einen Siedepunkt von mehr als 270°C, gemessen bei 100 kPa, hat, in Berührung bringt.

2. Verfahren nach Anspruch 1 dadurch gekennzeichnet, daß das Phenolderivat ein Molekulargewicht von mindestens 250 hat.

3. Verfahren nach Anspruch 1 und 2, dadurch gekennzeichnet, daß das Phenolderivat ein Derivat des 2,6-Di-tert.-Butylphenols ist.

4. Olefinpolymerisat, erhältlich nach dem Verfahren gemäß den Ansprüchen 1 bis 3.

5. Verwendung der gemäß den Ansprüchen 1 bis 3 erhaltenen Olefinpolymerisate zur Herstellung von Fasern, Folien und Formkörpern.

6. Fasern, Folien und Formkörper, erhältlich aus den gemäß den Ansprüchen 1 bis 3 erhaltenen Olefinpolymerisaten als wesentliche Komponente.

## Claims

1. A process for preparing stabilized olefin polymers which have a low cold heptane extractables content by polymerization of olefins with Ziegler or Phillips catalysts at from 30 to 140°C, wherein the polymerization mixture is, immediately after leaving the polymerization reactor, brought into contact with a phenol derivative which has a boiling point above 270°C measured under 100 kPa.

2. A process as claimed in claim 1, wherein the phenol derivative has a molecular weight of at least 250.

3. A process as claimed in claim 1 or 2, wherein the phenol derivative is a derivative of 2,6-di-tert-butylphenol.

4. An olefin polymer obtainable by the process as claimed in any of claims 1 to 3.

5. The use of the olefin polymers obtained as claimed in any of claims 1 to 3 for producing fibers, sheets and moldings.

6. A fiber, sheet or molding obtainable from the olefin polymers obtained as claimed in any of claims 1 to 3 as essential component.

## Revendications

1. Procédé pour la préparation de polymères d'oléfine stabilisés comprenant une faible partie extractible avec de l'heptane froid, au moyen d'une polymérisation d'oléfines avec des catalyseurs de Ziegler ou de Phillips à des températures comprises entre 30 et 140°C, caractérisé par le fait qu'on met le mélange de polymérisation en contact, directement après sa sortie du réacteur de polymérisation, avec un dérivé phénolique qui présente un point d'ébullition de plus de 270°C, mesuré sous 100 kPa.

2. Procédé selon la revendication 1, caractérisé par le fait que le dérivé phénolique a une masse moléculaire d'au moins 250.

3. Procédé selon la revendication 1 et 2, caractérisé par le fait que le dérivé phénolique est un dérivé du 2,6-di-tert-butylphénol.

4. Polymères d'oléfine, pouvant être obtenus par le procédé selon les revendications 1 à 3.

5. Utilisation des polymères d'oléfine obtenus selon les revendications 1 à 3 pour la préparation de fibres, de feuilles et de pièces moulées.

6. Fibres, feuilles et pièces moulées, pouvant être obtenues à partir des polymères d'oléfine obtenus selon les revendications 1 à 3 en tant que composant essentiel.
